# EUROPEAN PATENT APPLICATION

(11) **EP 2 720 197 A2**
(43) Date of publication of application: **16.04.2014**
(21) Application number: 13004581.8
(22) Date of filing: 19.09.2013
(51) Int. Cl.: G06T 19/00

(54) **Content display systems and methods**

(30) Priority: 12.10.2012 US 201213651200
(71) Applicant: SAP AG, 69190 Walldorf (DE)
(72) Inventor: Hoyer, Timo, 69190 Walldorf (DE)
(74) Representative: Müller-Boré & Partner Patentanwälte PartG mbB

(57) **Abstract**

Example systems and methods of displaying content are described. In one implementation, a method identifies a content item capable of being displayed to a user. The method further identifies a graphical object having a first side containing first information and an opposite second side containing second information. The graphical object is rotatable between displaying the first side and displaying the second side in response to a user activation of the graphical object. The graphical object is associated with the content item. A visual indicator is selected that identifies the association between the graphical object and the content item. The method associates the visual indicator with the content item and the graphical object.

## Description

### FIELD

The present disclosure relates generally to the management of data and, more specifically, to displaying content to one or more users.

### BACKGROUND

Computing systems and application programs display various types of content to users via a display device. In some situations, a user interacts with the displayed content to view information of interest to the user. Depending on the size of the display device and the amount of displayed content, the display device may not be capable of displaying all of the content to the user simultaneously. In this situation, only a portion of the available content is displayed to the user at a particular time.

### BRIEF DESCRIPTION OF THE DRAWINGS

The present disclosure is illustrated by way of example and not limitation in the figures of the accompanying drawings, in which like references indicate similar elements.

FIG. 1 is a block diagram of an example system capable of employing the systems and methods described herein.

FIG. 2 is a flow diagram of an example method of associating a content item, a graphical object, and a visual indicator.

FIG. 3 is a flow diagram of an example method of displaying a content item, a graphical object, and a visual indicator.

FIG. 4 illustrates an example content package including a content item, a graphical object, and a visual indicator.

FIG. 5 illustrates an example user interface displaying a content item, a graphical object, and a visual indicator that attaches the content item to the graphical object.

FIG. 6 illustrates an example user interface similar to the user interface of FIG. 5, but showing an opposite side of the graphical object.

FIGS. 7A-7I illustrate example user interfaces displaying, at various times, an animation of the rotating of the graphical object between displaying a first side and a second side.

FIG. 8 illustrates another example user interface displaying a content item, a graphical object, and a visual indicator attaching the content item to the graphical object.

FIG. 9 illustrates another example user interface displaying a content item, a graphical object, and a visual indicator attaching the content item to the graphical object.

FIG. 10 depicts a block diagram of a machine in the example form of a processing system within which may be executed a set of instructions for causing the machine to perform any one or more of the methodologies discussed herein.

### DETAILED DESCRIPTION

The description that follows includes illustrative systems, methods, techniques, instruction sequences, and computing machine program products that embody illustrative embodiments. In the following description, for purposes of explanation, numerous specific details are set forth in order to provide an understanding of various embodiments of the inventive subject matter. It will be evident, however, to those skilled in the art that embodiments of the inventive subject matter may be practiced without these specific details. In general, well-known instruction instances, protocols, structures, and techniques have not been shown in detail.

At least some of the embodiments described herein provide systems and methods for displaying content on a display device. These embodiments discuss, by way of example, the display and management of content items and related graphical objects. Some embodiments describe graphical objects that are rotatable to show data on multiple sides of the object, thereby providing flexibility in the display of information on a display device.

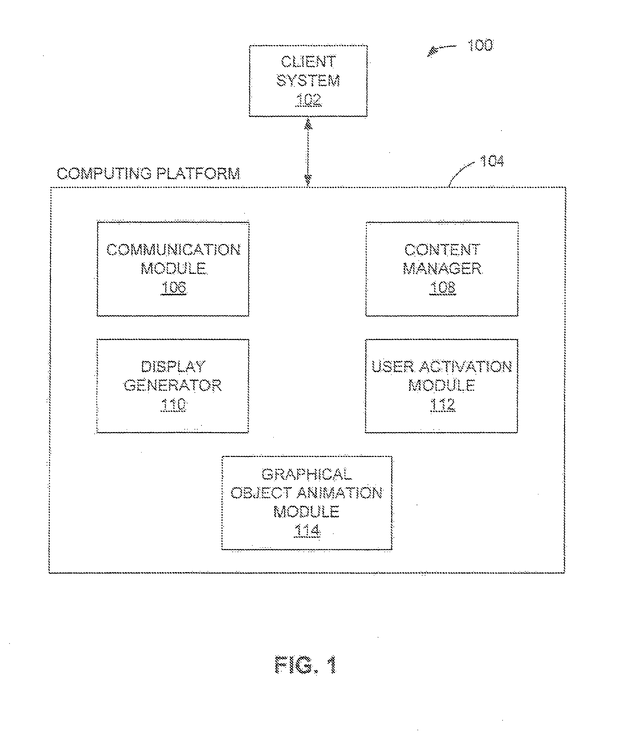

FIG. 1 is a block diagram of an example system 100 capable of employing the systems and methods described herein. In the example of FIG. 1, a computing platform 104 is accessed by a client system 102. Although one client system 102 is shown in FIG. 1, particular embodiments may include any number of client systems 102 accessing the computing platform 104. The client system 102 includes any type of system capable of communicating with computing platform 104. For example, the client system 102 may include a server, a client computer, a desktop computer, a laptop computer, a tablet computer, a mobile device, a portable entertainment device or any other machine capable of performing one or more of the functions and operations discussed herein. The computing platform 104 includes, for example, machines and software to implement the described content display systems and methods.

In some embodiments, the client system 102 communicates with the computing platform 104 via a data communication network, such as the Internet, a local area network (LAN), wide area network (WAN), and so forth. In particular implementations, the client system 102 may be accessed or operated by a variety of users, such as an application developer, a network administrator or an end-user of an application. In other implementations, one or more functions performed by the client system 102 may be handled automatically and without user intervention.

The computing platform 104 includes a communication module 106 capable of communicating with a variety of different systems through a data communication network or other communication mechanism. For example, the communication module 106 may communicate with the client system 102, other computing platforms, content sources, data storage devices, and the like. A content manager 108 performs various functions related to accessing, organizing, and presenting content items to one or more users. For example, the content manager 108 identifies and stores associations between content items, graphical objects, and visual indicators as discussed herein. Further, the content manager 108 modifies the content items, graphical objects, and visual indicators based on user instructions and other user activities. The content manager 108 also generates and maintains content packages that include a set of associated content item, graphical object, and visual indicator, as discussed herein.

The computing platform 104 further includes a display generator 110 and a user activation module 112. The display generator 110 prepares data (e.g., content items, graphical objects, and visual indicators) capable of being rendered by the client system 102 for presentation to a user of the client system 102. The user activation module 112 receives input from the client system 102 that identifies user instructions, user activation of content features, and other user activities. The input received by the user activation module 112 is communicated to the content manager 108 and the display generator 110, as needed, to modify the content based on the user input. The computing platform 104 also includes a graphical object animation module 114 that manages the animation of graphical objects and other content items based on the received user input. Additional details regarding the animation of graphical objects and other content items are discussed herein.

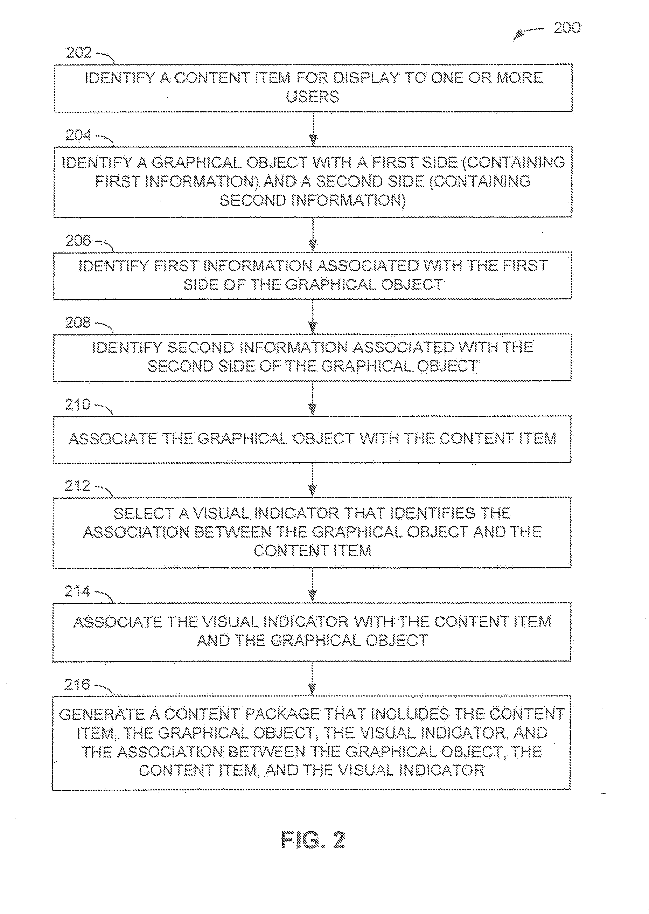

FIG. 2 is a flow diagram of an example method 200 of associating a content item, a graphical object, and a visual indicator. Initially, the method 200 identifies a content item for display to one or more users at 202. The content item includes any type of content, data, image or other information. For example, the content item may include a document, a spreadsheet, a presentation, a picture, a product assembly guide, a brochure, a training manual, an invoice, and so forth.
The content item may be accessible from a storage device, a computing platform (e.g., computing platform 104 shown in FIG. 1), a remote data source, and the like.

The method 200 continues by identifying a graphical object having a first side, which contains first information, and a second side, which contains second information, at 204. As discussed herein, the graphical object is rotatable between displaying the first side and displaying the second side. The method 200 identifies first information associated with the first side of the graphical object at 206 and identifies second information associated with the second side of the graphical object at 208. In a particular example, the graphical object represents a person's business card. In this example, the first side of the graphical object includes the person's name, employer, and job title. The second side of the graphical object includes the person's contact information, such as telephone number, email address, and mailing address.

The method 200 further associates the graphical object with the content item at 210. In some embodiments, this association provides a virtual "link" between the graphical object and the content item, which indicates that the graphical object should be displayed along with the content item. A visual indicator is selected at 212 that identifies the association between the graphical object and the content item. The visual indicator includes, for example, an image of a paper clip, a staple, a pin, a binder clip, a fastener, a piece of tape, and the like. The visual indicator visually simulates an attachment of the graphical object to the content item, much like a paper clip or similar device attaches a physical business card to a printed document. The visual indicator is associated with the content item and the graphical object at 214.

After associating the visual indicator with the content item and the graphical object, the method 200 generates a content package that includes the content item, the graphical object, and the visual indicator at 216. Additionally, the content package includes a definition or other indication of the association between the graphical object, the content item, and the visual indicator. The content package is stored in one or more storage devices for future access. In some embodiments, the content package can be communicated to a user as a single file that ensures the display of the graphical object with the content item.

In a particular example, the graphical object represents a business card that includes, for example, a person's name, employer, and job title on the first side, and contact information (e.g., telephone number, email address, and mailing address) for the person on the second side. In this example, the content item is a product brochure or other customer information, and the business card belongs to the sales representative who is providing the product brochure to a potential customer. By providing a rotatable business card, the amount of display area needed to display the business card is less than the display area needed to present all information on the business card (both sides of the card) simultaneously. Additionally, many individuals are familiar and comfortable with handling physical business cards. By providing a visual image of the business card along with a paper clip or other visual indicator, individuals see an immediate familiarity to a traditional physical brochure, business card, and paper clip.

In some embodiments, the first side of the graphical object includes summary or overview information related to the content item, such as company information and a company logo. The second side of the graphical object includes more detailed information related to the content item, such as specific company contact details or specific product information.

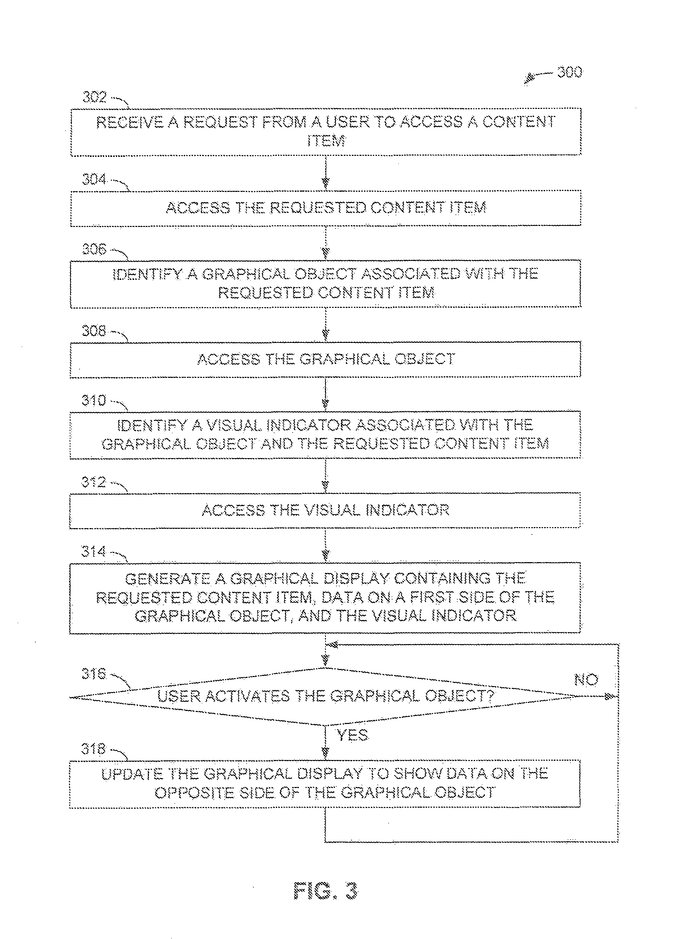

FIG. 3 is a flow diagram of an example method 300 of displaying a content item, a graphical object, and a visual indicator. Initially, the method 300 receives a request from a user to access a content item at 302. The method 300 accesses the requested content item at 304 and identifies a graphical object associated with the requested content item at 306. Additionally, the identified graphical object is accessed at 308. The method 300 continues by identifying a visual indicator associated with the graphical object and the requested content item at 310, and accessing the visual indicator at 312.

Next, the method 300 generates a graphical display containing the requested content item, data on a first side of the graphical object, and the visual indicator at 314. In some embodiments, the generated graphical display is communicated to a display device (or a system coupled to a display device) for presenting the requested content item, data on the first side of the graphical object, and the visual indicator to a user. The method 300 continues by determining whether a user activates the graphical object at 316. The user may activate the graphical object, for example, by touching a portion of a touch-sensitive display proximate the graphical object. Alternatively, the user may activate the graphical object by clicking on the graphical object using a pointing device, using a menu selection, and the like.

If a user has activated the graphical object, the method 300 updates the graphical display to show data on the opposite side of the graphical object at 318. As discussed herein, this updating of the graphical display may include presenting an animation of the graphical object rotating between displaying the first side of the graphical object and the opposite side of the graphical object. If a user has not activated the graphical object at 316, the method 300 continues monitoring the display device for any user activation of the graphical object.

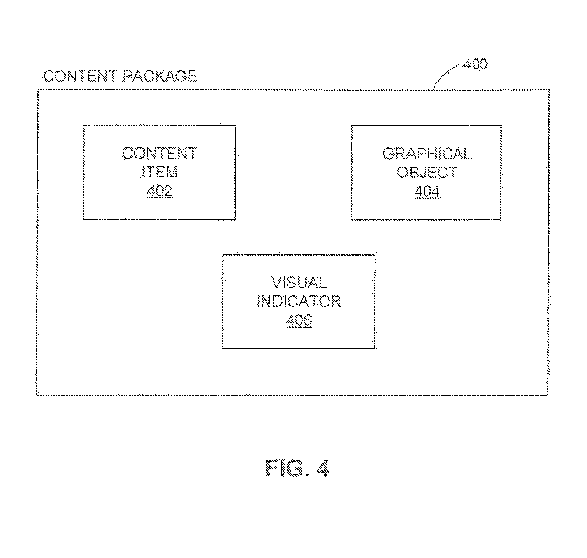

FIG. 4 illustrates an example content package 400 including a content item 402, a graphical object 404, and a visual indicator 406. As discussed herein, the content item 402 includes, for example, a document, a spreadsheet, a presentation, a picture, a product assembly guide, a brochure, a training manual, an invoice, and the like. The graphical object 404 includes, for example, a business card, information card, or other object having first data associated with a first side of the graphical object 404 and second data associated with a second side of the graphical object 404. The visual indicator 406 includes, for example, an image of a paper clip, a staple, a pin, a binder clip, a fastener, a piece of tape, and the like. In some embodiments, the content package 400 is stored as a single file or other data structure that is communicated to a device or system, which presents the content item 402, the graphical object 404, and the visual indicator 406 to a user. In these embodiments, the single file is communicated to the device or system rather than communicating the three separate components (i.e., the content item 402, the graphical object 404, and the visual indicator 406).

In some embodiments, the content package 400 includes additional information, such as a text label, that instructs a user how to interact with the graphical object 404. For example, the text label may indicate "flip the card" to indicate that a user can flip the graphical object 404 to see the opposite side. In other embodiments, the content package 400 includes information that briefly animates the rotation of the graphical object 404 when displayed to a user. For example, the graphical object 404 may begin to rotate slightly or the visual indicator 406 may display a slight movement.

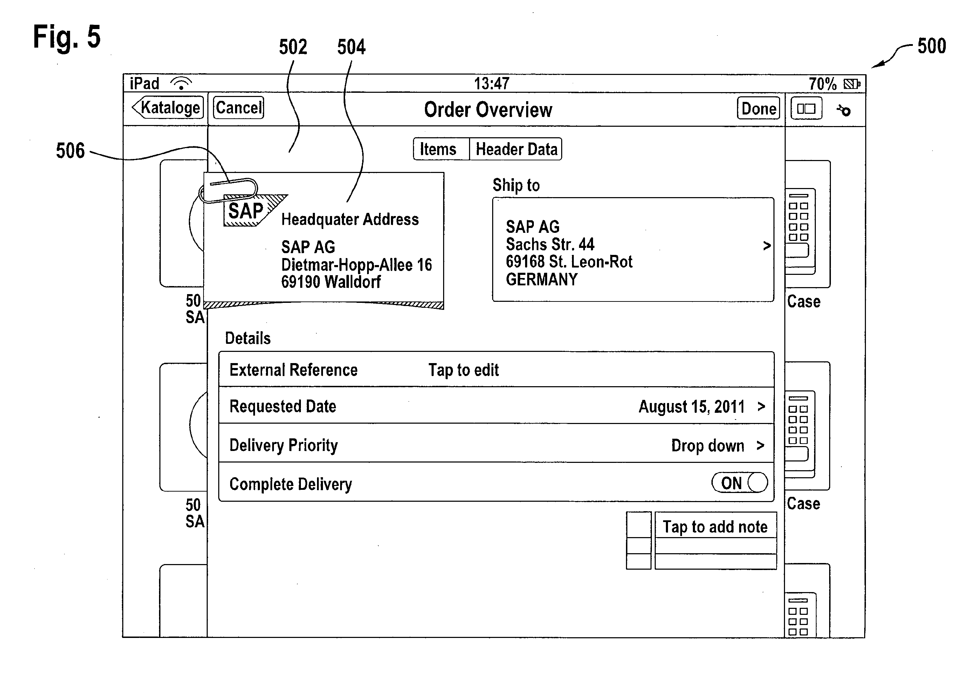

FIG. 5 illustrates an example user interface 500 displaying a content item 502, a graphical object 504, and a visual indicator 506 attaching the content item 502 to the graphical object 504. As shown in FIG. 5, the content item 502 is an order overview, the graphical object 504 is a business card for a user or entity associated with the order, and the visual indicator 506 is a paper clip that visually associates the business card with the order overview. As discussed herein, a user can activate the graphical object 504 by touching the user interface 500 proximate the graphical object 504, clicking on the graphical object 504 using a pointing device, and the like. In response to a user activation of the graphical object 504, the graphical object 504 rotates to display data on an opposite side of the graphical object 504.

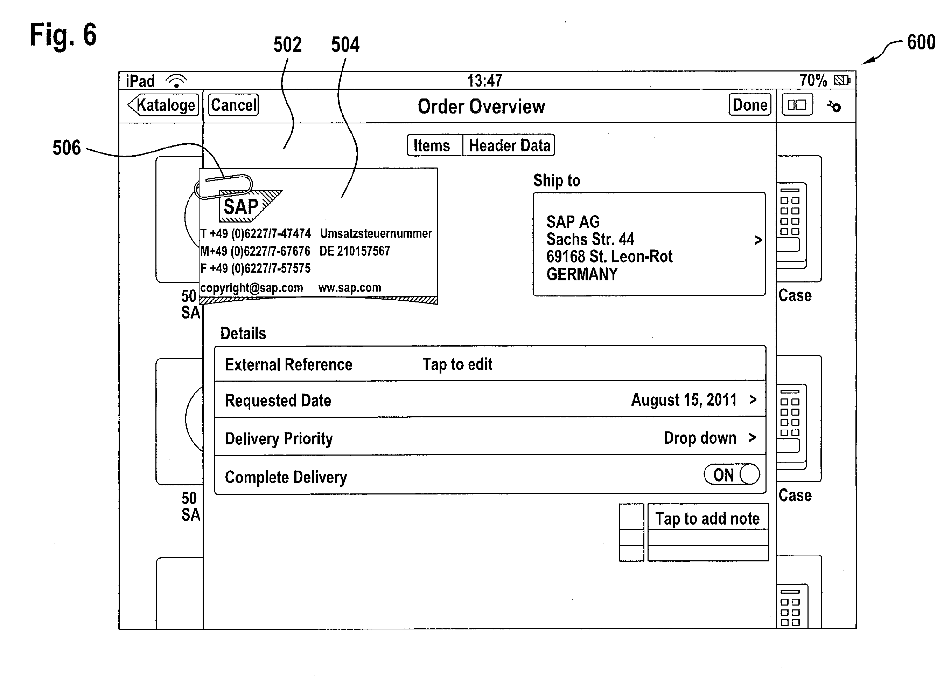

FIG. 6 illustrates an example user interface 600 similar to the user interface of FIG. 5, but showing the opposite side of the graphical object 504. The user interface 600 displays the same content item 502 (order overview), graphical object 504 (business card), and visual indicator 506 (paper clip) as those shown in FIG. 5. However, the graphical object 504 has been rotated to show the opposite side of the business card, including contact information, such as telephone number, fax number, and email address. The visual indicator 506 continues to visually associate the business card with the order overview regardless of which side of the business card is displayed.

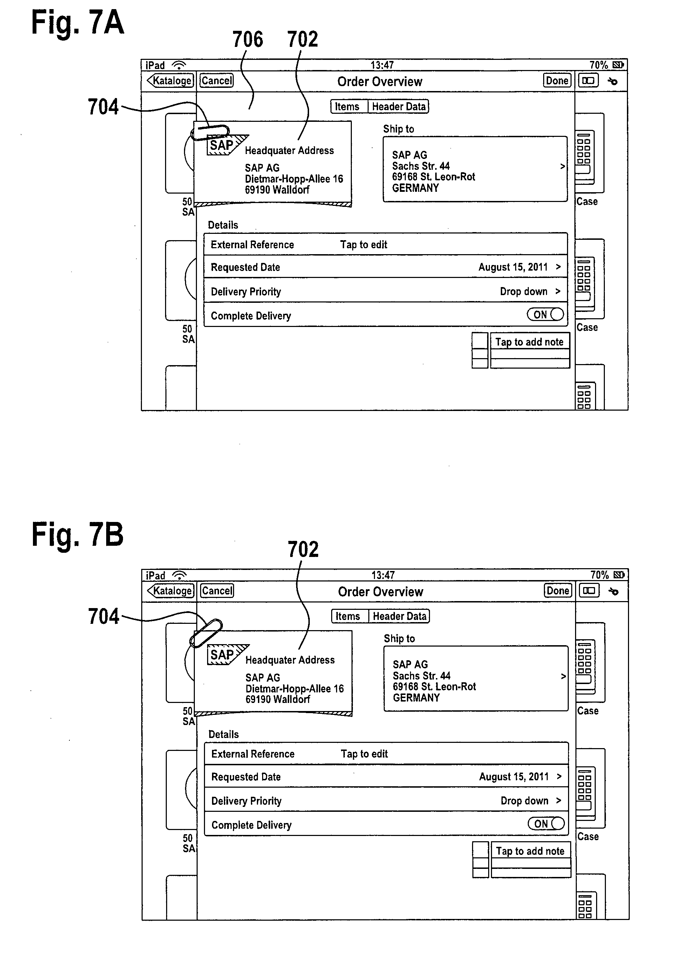

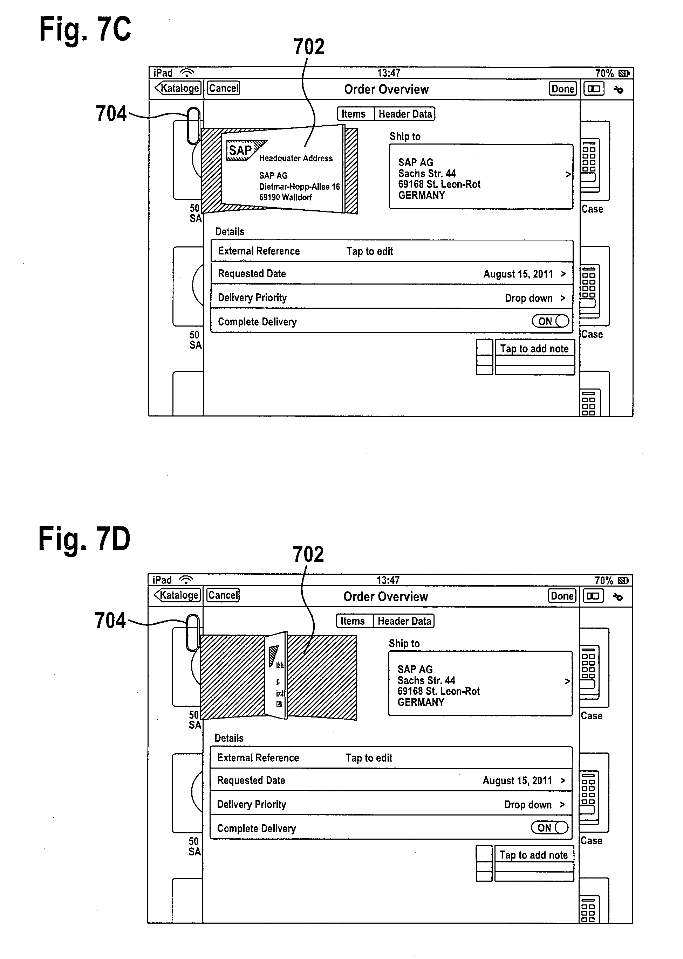

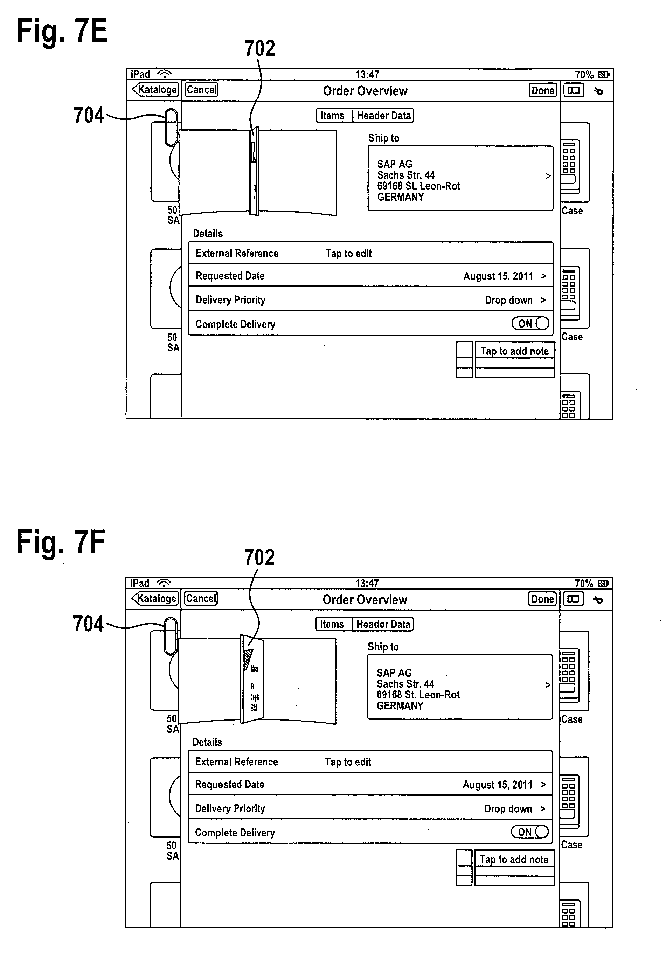

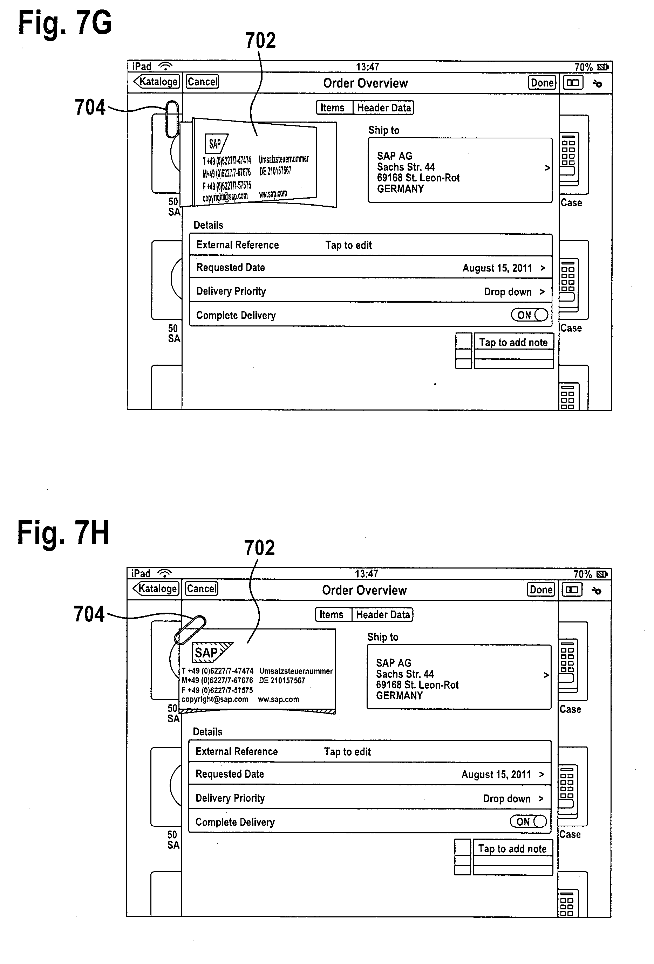

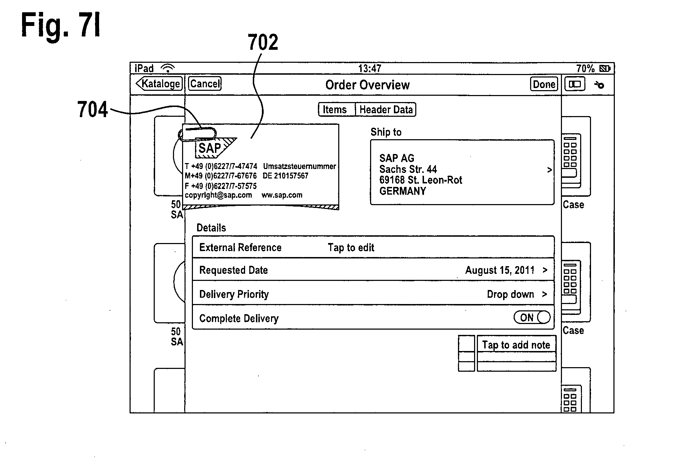

FIGS. 7A-7I illustrate example user interfaces displaying, at various times, an animation of the rotating of a graphical object 702 between displaying a first side and a second side. In FIG. 7A, the graphical object 702 is shown in an initial position that displays the first side of the graphical object 702. The graphical object 702 is "attached" to a content item 706 using a visual indicator 704. In this example, the visual indicator 704 resembles a paper clip. In FIG. 7B, the position of the graphical object 702 is the same as in FIG. 7A, but the visual indicator 704 is moved in a manner to indicate releasing the graphical object 702 from the content item 706. In FIG. 7C, the visual indicator 704 has moved away from the graphical object 702 and the graphical object 702 has started to rotate. In FIG. 7D through FIG. 7G, the graphical object 702 continues to rotate while the visual indicator 704 remains in the same position as in FIG. 7C.

In FIG. 7H, rotation of the graphical object 702 is complete, and the visual indicator 704 begins to move back to a position indicating that the graphical object 702 is attached to the content item 706. FIG. 7I shows the completed process of rotating the graphical object 702 to display the second side of the graphical object 702. Although nine images (FIGs. 7A-7I) are described herein, particular embodiments may utilize any number of different image positions (or image frames) to perform the animation of the graphical object 702 and the visual indicator 704. In some embodiments, a similar process of displaying multiple image frames is used to rotate the graphical object 702 from displaying the second side back to displaying the first side.

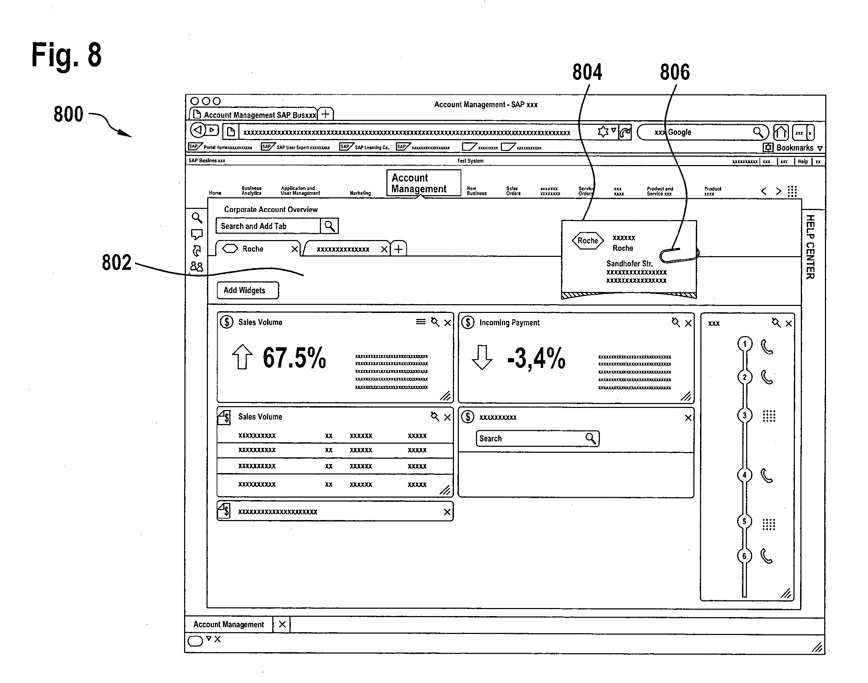

FIG. 8 illustrates another example user interface 800 displaying a content item 802, a graphical object 804, and a visual indicator 806 attaching the content item 802 to the graphical object 804. In this example, the content item 802 is a corporate account overview that displays information regarding a specific account or a specific object. The content item 802 displays information related to sales volume, incoming payments, and the like. The graphical object 804 includes a company name, company logo, and contact information for the company. In particular embodiments, the opposite side (not shown) of graphical object 804 includes contact information for a specific representative of the company.

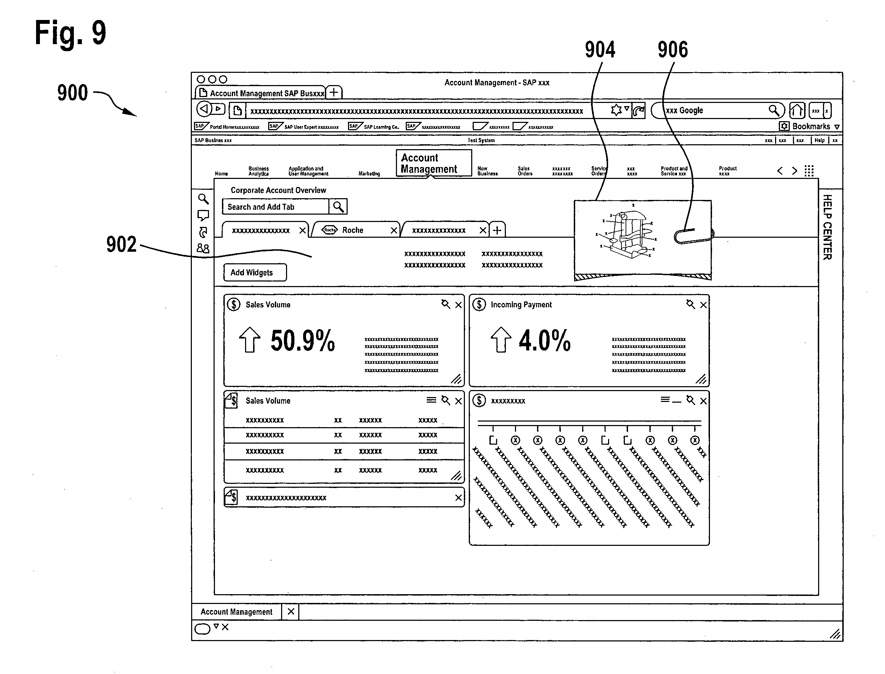

FIG. 9 illustrates another example user interface 900 displaying a content item 902, a graphical object 904, and a visual indicator 906 attaching the content item 902 to the graphical object 904. In this example, the content item 902 is a corporate account overview displaying information related to a specific account or a specific object. The content item 902 displays information related to sales volume, incoming payments, sales quotes, and the like. The graphical object 904 includes a picture of a product or machine associated with, for example, a specific order. In particular embodiments, the opposite side (not shown) of graphical object 904 includes additional information about the product or machine, such as a product identification number, a short product description, and the like.

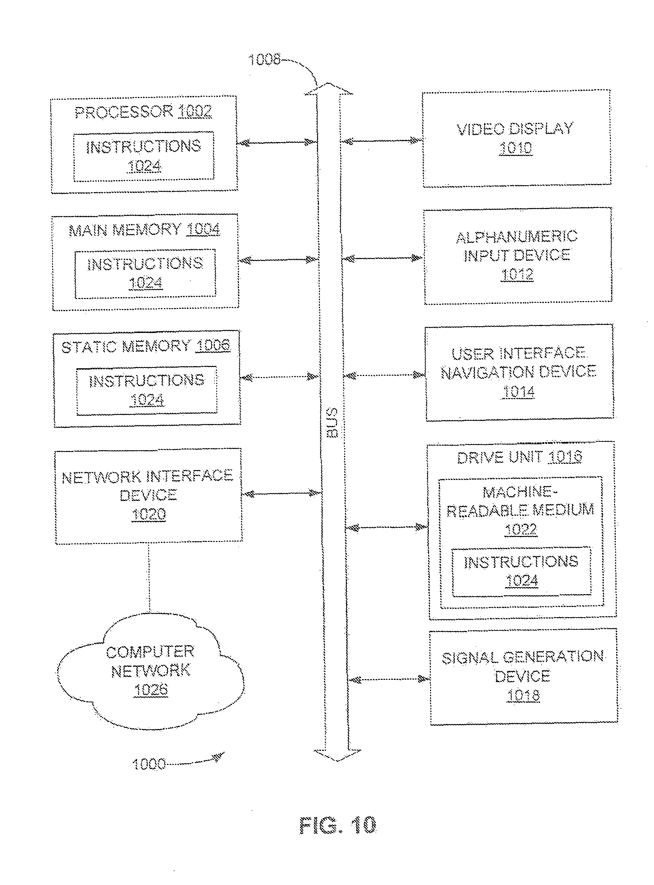

FIG. 10 depicts a block diagram of a machine in the example form of a processing system 1000 within which may be executed a set of instructions 1024 for causing the machine to perform any one or more of the methodologies discussed herein. In alternative embodiments, the machine operates as a standalone device or may be connected (for example, networked) to other machines. In a networked deployment, the machine may operate in the capacity of a server or a client machine in a server-client network environment, or as a peer machine in a peer-to-peer (or distributed) network environment.

The machine is capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example of the processing system 1000 includes a processor 1002 (for example, a central processing unit (CPU), a graphics processing unit (GPU), or both), a main memory 1004 (for example, random access memory), and static memory 1006 (for example, static random-access memory), which communicate with each other via bus 1008. The processing system 1000 may further include video display unit 1010 (for example, a plasma display, a liquid crystal display (LCD), or a cathode ray tube (CRT)). The processing system 1000 also includes an alphanumeric input device 1012 (for example, a keyboard), a user interface (UI) navigation device 1014 (for example, a mouse), a disk drive unit 1016, a signal generation device 1018 (for example, a speaker), and a network interface device 1020.

The disk drive unit 1016 (a type of non-volatile memory storage) includes a machine-readable medium 1022 on which is stored one or more sets of data structures and instructions 1024 (for example, software) embodying or utilized by any one or more of the methodologies or functions described herein. The data structures and instructions 1024 may also reside, completely or at least partially, within the main memory 1004, the static memory 1006, and/or within the processor 1002 during execution thereof by processing system 1000, with the main memory 1004 and processor 1002 also constituting machine-readable, tangible media.

The data structures and instructions 1024 may further be transmitted or received over a computer network 1026 via network interface device 1020 utilizing any one of a number of well-known transfer protocols (for example, HyperText Transfer Protocol (HTTP)).

Certain embodiments are described herein as including logic or a number of components, modules, or mechanisms. Modules may constitute either software modules (for example, code embodied on a machine-readable medium or in a transmission signal) or hardware modules. A hardware module is a tangible unit capable of performing certain operations and may be configured or arranged in a certain manner. In example embodiments, one or more computer systems (for example, the processing system 1000) or one or more hardware modules of a computer system (for example, a processor 1002 or a group of processors) may be configured by software (for example, an application or application portion) as a hardware module that operates to perform certain operations as described herein.

In various embodiments, a hardware module may be implemented mechanically or electronically. For example, a hardware module may include dedicated circuitry or logic that is permanently configured (for example, as a special-purpose processor, such as a field-programmable gate array (FPGA) or an application-specific integrated circuit (ASIC)) to perform certain operations. A hardware module may also include programmable logic or circuitry (for example, as encompassed within a general-purpose processor 1002 or other programmable processor) that is temporarily configured by software to perform certain operations. It will be appreciated that the decision to implement a hardware module mechanically, in dedicated and permanently configured circuitry, or in temporarily configured circuitry (for example, configured by software) may be driven by cost and time considerations.

Accordingly, the term "hardware module" should be understood to encompass a tangible entity, be that an entity that is physically constructed, permanently configured (for example, hardwired) or temporarily configured (for example, programmed) to operate in a certain manner and/or to perform certain operations described herein. Considering embodiments in which hardware modules are temporarily configured (for example, programmed), each of the hardware modules need not be configured or instantiated at any one instance in time. For example, where the hardware modules include a general-purpose processor 1002 that is configured using software, the general-purpose processor 1002 may be configured as respective different hardware modules at different times. Software may accordingly configure a processor 1002, for example, to constitute a particular hardware module at one instance of time and to constitute a different hardware module at a different instance of time.

Modules can provide information to, and receive information from, other modules. For example, the described modules may be regarded as being communicatively coupled. Where multiples of such hardware modules exist contemporaneously, communications may be achieved through signal transmissions (such as, for example, over appropriate circuits and buses) that connect the modules. In embodiments in which multiple modules are configured or instantiated at different times, communications between such modules may be achieved, for example, through the storage and retrieval of information in memory structures to which the multiple modules have access. For example, one module may perform an operation and store the output of that operation in a memory device to which it is communicatively coupled. A further module may then, at a later time, access the memory device to retrieve and process the stored output. Modules may also initiate communications with input or output devices, and can operate on a resource (for example, a collection of information).

The various operations of example methods described herein may be performed, at least partially, by one or more processors 1002 that are temporarily configured (for example, by software) or permanently configured to perform the relevant operations. Whether temporarily or permanently configured, such processors 1002 may constitute processor-implemented modules that operate to perform one or more operations or functions. The modules referred to herein may, in some example embodiments, include processor-implemented modules.

Similarly, the methods described herein may be at least partially processor-implemented. For example, at least some of the operations of a method may be performed by one or more processors 1002 or processor-implemented modules. The performance of certain of the operations may be distributed among the one or more processors 1002, not only residing within a single machine but deployed across a number of machines. In some example embodiments, the processors 1002 may be located in a single location (for example, within a home environment, within an office environment, or as a server farm), while in other embodiments, the processors 1002 may be distributed across a number of locations.

While the embodiments are described with reference to various implementations and exploitations, it will be understood that these embodiments are illustrative and that the scope of claims provided below is not limited to the embodiments described herein. In general, the techniques described herein may be implemented with facilities consistent with any hardware system or hardware systems defined herein. Many variations, modifications, additions, and improvements are possible.

Plural instances may be provided for components, operations, or structures described herein as a single instance. Finally, boundaries between various components, operations, and data stores are somewhat arbitrary, and particular operations are illustrated in the context of specific illustrative configurations. Other allocations of functionality are envisioned and may fall within the scope of the claims. In general, structures and functionality presented as separate components in the exemplary configurations may be implemented as a combined structure or component. Similarly, structures and functionality presented as a single component may be implemented as separate components. These and other variations, modifications, additions, and improvements fall within the scope of the claims and their equivalents.

## Claims

1. A method comprising:
identifying a content item capable of being displayed to a user;
identifying a graphical object having a first side containing first information and an opposite second side containing second information, the graphical object being rotatable between displaying the first side and displaying the second side responsive to a user activation of the graphical object;
associating, using one or more processors, the graphical object with the content item;
selecting a visual indicator that identifies the association between the graphical object and the content item; and
associating the visual indicator with the content item and the graphical object.

2. The method of claim 1, further comprising generating a graphical display containing the content item, the first information, and the visual indicator.

3. The method of claim 1 or 2, the content item including at least one of a document, a spreadsheet, a presentation, a picture, a brochure, and an invoice; and/or
the visual indicator including at least one of an image of a paper clip, a staple, a pin, a binder clip, a fastener, and a piece of tape.

4. The method of any one of claims 1 to 3, wherein the visual indicator visually simulates an attachment of the graphical object to the content item.

5. The method of any one of claims 1 to 4, the user activation of the graphical object including selecting the graphical object by touching a touch-sensitive display screen; and/or
the user activation of the graphical object including selecting the graphical object by activating a user-controlled pointing device proximate the graphical object; and/or
the user activation causing an animation of the graphical object that graphically simulates a rotation of the graphical object to view the opposite side of the graphical object.

6. The method of any one of claims 1 to 5, further comprising generating a content package including the content item, the graphical object, and the visual indicator, wherein the content package may further include the association between the visual indicator, the content item, and the graphical object.

7. The method of claim 6, further comprising communicating the content package to a plurality of users.

8. The method of any one of claims 1 to 7, the associating of the visual indicator with the content item and the graphical object including displaying a visual association of the visual indicator with the content item and the graphical object.

9. A method comprising:
receiving a request from a user to access a content item;
accessing the requested content item;
identifying a graphical object associated with the requested content item;
accessing the graphical object;
identifying a visual indicator associated with the graphical object and the requested content item;
accessing the visual indicator;
generating, using one or more processors, a graphical display containing the requested content item, data on a first side of the graphical object, and the visual indicator; and
responsive to user activation of the graphical object, updating the graphical display to contain data on a second side of the graphical object.

10. The method of claim 9, wherein the updating of the graphical display to contain data on the second side of the graphical object includes presenting an animation of the graphical object that graphically simulates a rotation of the graphical object to view an opposite side of the graphical object.

11. The method of claim 9 or 10, further comprising, responsive to a second user activation of the graphical object, updating the graphical display to contain data on the first side of the graphical object.

12. The method of claim 11, wherein the updating of the graphical display to contain data on the first side of the graphical object includes presenting an animation of the graphical object that graphically simulates rotation of the graphical object to view an opposite side of the graphical object.

13. The method of any one of claims 9 to 12, the content item including at least one of a document, a spreadsheet, a presentation, a picture, a brochure, and an invoice; and/or
the visual indicator including at least one of
an image of a paper clip, a staple, a pin, a binder clip, a fastener, and a piece of tape.

14. The method of any one of claims 9 to 13, wherein the visual indicator visually
simulates an attachment of the graphical object to the content item.

15. A system comprising:
a content manager configured to identify a content item and a graphical object capable of being displayed to a user, the graphical object having a first side containing first information and a second side containing second information, the graphical object being rotatable between displaying the first side and the second side responsive to a user activation of the graphical object, the content manager further configured to associate the graphical object with the content item;
a user activation module configured to identify the user activation of the graphical object; and
a graphical object animation module configured to generate an animation of the graphical object that graphically simulates rotation of the graphical object to view an opposite side of the graphical object.
